# EUROPEAN PATENT APPLICATION

(11) **EP 2 361 754 A2**
(43) Date of publication of application: **31.08.2011**
(21) Application number: 10197069.7
(22) Date of filing: 27.12.2010
(51) Int. Cl.: B29D 11/00, G02B 3/00

(54) **Lens array**

(30) Priority: 26.02.2010 JP 2010043136
(71) Applicant: FUJIFILM Corporation, Tokyo (JP)
(72) Inventor: Yamada, Daisuke, Saitama (JP); Harada, Akinori, Saitama (JP)
(74) Representative: Klunker . Schmitt-Nilson . Hirsch

(57) **Abstract**

A lens array includes: a substrate (31) in which a plurality of through holes (34) are formed; and a plurality of lenses (32) provided in the substrate by filling the plurality of through holes respectively. A protrusion portion (36) that is opaque to an incident light is provided in the through hole as an aperture, which cuts off a light incident on parts except an opening portion. And, the protrusion portion extends from an inner wall of the through hole toward an optical axis of the lens in one planar surface, which is perpendicular to the optical axis of the lens buried in the through hole, to constitute the opening portion around the optical axis.

## Description

### BACKGROUND

### 1. Technical Field

The present invention relates to a lens array.

### 2. Related Art

Nowadays, a mobile terminal as an electronic equipment such as a cellular phone, PDA (Personal Digital Assistant), or the like is equipped with a small and thin image pickup unit. In general, such image pickup unit is equipped with a solid state image pickup device such as a CCD (Charge Coupled Device) image sensor, a CMOS (Complementary Metal Oxide Semiconductor) image sensor, or the like, and one lens or more for forming an image of a subject on the solid state image pickup device.

In compliance with a reduction in size and thickness of the mobile terminal, a further reduction in size and thickness is also requested of the image pickup unit. Also, better productivity of the image pickup unit is requested at a time of production. In answer to such request, such a method is proposed that one lens array, in which a plurality of lenses are aligned respectively, or more are stacked on a sensor array in which a plurality of solid state image pickup devices are aligned, and then the image pickup units are mass-produced by cutting the resultant laminated structure in such a way that each image pickup unit contains the solid state image pickup device and the lenses (see Patent Document 1 (WO-A-2008/102648), for example).

As the lens array employed in above application, Patent Document 1 discloses that the lens is constructed by the substrate and the lens member such that the lens member made of resin material is joined to a surface of the parallel-plate substrate formed of light transmissible material such as glass, or the like. Also, Patent Document 2 (WO-A-2009/076790) discloses that the through hole is formed in the substrate and the lens is formed of resin material that is filled in the through hole.

In the lens array set forth in Patent Document 1, a thickness of respective parts of the lens cannot be made smaller than a thickness of the substrate, and thus a reduction in thickness of the lens is restricted. In contrast, according to the lens array set forth in Patent Document 2, the lens is provided in the through hole in the substrate, and thus the lens having a part whose thickness is smaller than the substrate can be formed.

Also, normally the aperture diaphragm for adjusting brightness of the image is fitted to the image pickup unit (see Patent Document 1 and Patent Document 3 (JP-B-3926380), for example). In Patent Document 1, such a structure is also set forth that the aperture pattern is formed on the surface of the substrate by the coating method such as the coating, the vacuum deposition, or the like such that the aperture is arranged in the lens integrally with the lens. Also, in Patent Document 3, such a structure is set forth that the aperture formed of the different material from the lens is arranged on the outside of the lens.

According to the structure set forth in Patent Document 1, the alignment between the lens and the aperture is not needed upon assembling the image pickup unit, and also the apertures can be fitted all together into a plurality of image pickup units. Therefore, this structure is suitable for the mass-production of the image pickup unit. However, the optimum position of the aperture is different depending on the structure of the optical system. For example, the optimum distance from the incident surface is different even in the inside of the lens depending on the structure of the optical system. In the structure set forth in Patent Document 1, the position of the aperture is restricted on the surface of the substrate, and thus cannot be changed.

### SUMMARY

An illustrative aspect of the invention is enhancing a flexibility of a position of an aperture in such a lens array that a plurality of lenses in which the aperture is provided integrally respectively are provided.

According to an aspect of the invention, a lens array includes: a substrate in which a plurality of through holes are formed; and a plurality of lenses provided in the substrate by filling the plurality of through holes respectively. A protrusion portion that is opaque to an incident light is provided in the through hole as an aperture, which cuts off a light incident on parts except an opening portion. And, the protrusion portion extends from an inner wall of the through hole toward an optical axis of the lens in one planar surface, which is perpendicular to the optical axis of the lens buried in the through hole, to constitute the opening portion around the optical axis.

According to one aspect of the invention, the position of the aperture can be changed in the depth direction of the through hole. That is, a flexibility of the position of the aperture can be enhanced.

### BRIEF DESCRIPTION OF THE DRAWINGS

FIG. 1 is a view showing an example of an image pickup unit to explain an embodiment of the present invention.
FIG.2 is a view showing an example of a lens array to explain the embodiment of the present invention.
FIG.3 is a view showing the lens array in FIG.2 in section taken along a III-III line.
FIGs.4A to 4D are views showing an example of a method of manufacturing a substrate contained in the lens array in FIG2.
FIG. 5 is a view showing an example of molding dies that are employed in manufacturing the lens array in FIG.2.
FIGs.6A to 6C are views showing an example of a method of manufacturing the lens array in FIG.2.
FIG.7 is a view showing a variation of the lens array in FIG2.
FIG.8 is a view showing another variation of the lens array in FIG.2.
FIG.9 is a view showing another example of the lens array to explain the embodiment of the present invention.
FIGs. 10A and 10B are views showing variations of the lens array in FIG.9.
FIGs.11A and 11B are view showing an example of a method of manufacturing the image pickup unit in FIG.1.
FIGs.12A to 12C are views showing a variation of a method of manufacturing the image pickup unit in FIGs. 11A and 11B.
FIG. 13 is a view showing another example of a method of manufacturing the image pickup unit in FIG.1.

### DETAILED DESCRIPTION

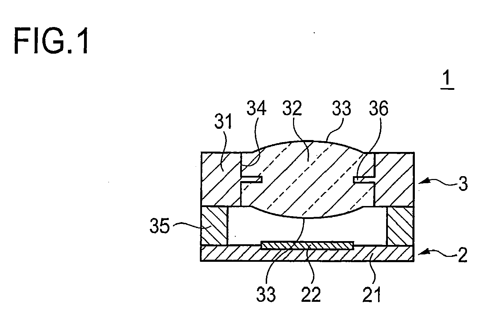

FIG. 1 shows an example of an image pickup unit.

An image pickup unit 1 contains a sensor module 2 containing a solid state imaging device 22, and a lens module 3 containing a lens 32.

The sensor module 2 has a wafer piece 21. The wafer piece 21 is formed of a semiconductor such as silicon, for example, and is formed like a substantially rectangular shape, when viewed from the top. The solid state imaging device 22 is provided in the almost center portion of the wafer piece 21. The solid state imaging device 22 is formed of a CCD image sensor, a CMOS image sensor, or the like, for example. The film forming step, the photolithography step, the etching step, the impurity implanting step, etc., which are well known, are applied to the wafer piece 21, and thus this solid state imaging device 22 is constructed by a light receiving area, electrodes, insulating films, wirings, etc. formed on the wafer piece 21.

The lens module 3 has a substrate piece 31 and the lens 32. The substrate piece 31 is formed like a substantially rectangular shape that is almost identical to the wafer piece 21 of the sensor module 2, when viewed from the top. A through hole 34 that passes through the substrate piece 31 in the thickness direction is formed in a center portion of the substrate piece 31. An aperture 36 is provided in this through hole 34. The lens 32 is provided to fill the through hole 34, and is secured to the substrate piece 31. An optical surface 33 is shaped into a convex spherical surface in all illustrated examples, but various combinations consisting of a convex spherical surface, a concave spherical surface, an aspherical surface, or a planar surface may be employed according to the application.

The lens module 3 is laminated on the sensor module 2 with the intervention of a spacer 35 between the substrate piece 31 and the wafer piece 21 of the sensor module 2. The lens 32 forms an image of a subject in a light receiving area of the solid state imaging device 22. Preferably the substrate piece 31 has a light shielding property. Accordingly, such a situation can be blocked that the light that is unnecessary for the image formation passes through the substrate piece 31 and is incident on the solid state imaging device 22. In the illustrated example, the lens module 3 laminated on the sensor module 2 is only one, but a plurality of lens modules 3 may be laminated on the sensor module 2.

A shape of the spacer 35 is not particularly limited so long as the lens module 3 can be stabilized on the sensor module 2. Preferably, the spacer 35 should be shaped like a frame that surrounds the solid state imaging device 22. When the spacer 35 is shaped like a frame, a space formed between the sensor module 2 and the lens module 3 can be isolated from the outside. As a result, it can be prevented that a foreign matter such as a dust, or the like enters into the space formed between the sensor module 2 and the lens module 3, and it can be prevented that a foreign matter adheres to the solid state imaging device 22 or the lens 32. In this case, when the light shielding property is provided to the spacer 35, such a situation can also be blocked that the light that is unnecessary for the image formation is incident on the solid state imaging device 22 through an area between the sensor module 2 and the lens module 3.

Typically, the image pickup unit 1 constructed as above is reflow-mounted on a circuit substrate of a mobile terminal. More particularly, a solder paste is printed previously in a position of the circuit substrate where the image pickup unit 1 is to be mounted, and the image pickup unit 1 is put on that position. Then, the heating process such as the irradiation of infrared rays, the blowing of a hot air, or the like is applied to the circuit substrate including this image pickup unit 1. Accordingly, the solder is fused and then goes solid, and thus the image pickup unit 1 is mounted on the circuit substrate.

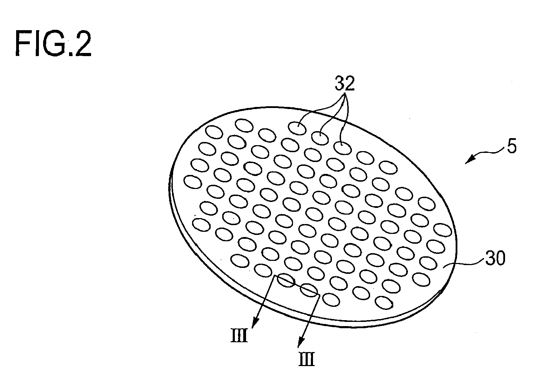

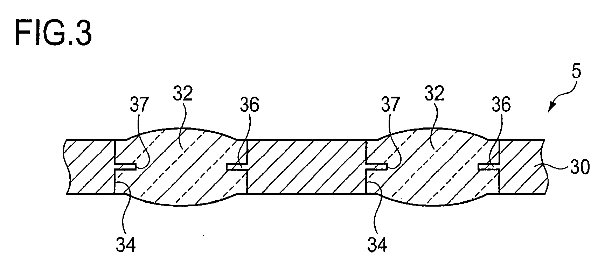

FIG.2 and FIG. 3 show an example of a lens array.

A lens array 5 shown in FIG.2 and FIG.3 has a substrate 30 and a plurality of lenses 32. The above lens module 3 is obtained by cutting the substrate 30, and then dividing the lens array 5 to contain the lens 32 individually. In other words, the lens array 5 is an assembly of the above lens modules 3.

The substrate 30 is formed like a wafer (circular plate), and typically a diameter of the substrate 30 is 6 inch, 8 inch, or 12 inch. A plurality of through holes 34 that pass through in the thickness direction respectively are formed in the substrate 30. The through holes 34 are aligned in a matrix fashion, and typically several thousand through holes 34 are aligned on the substrate 30 having the above size. In this case, a profile of the substrate 30 is not limited to the wafer shape and, for example, a rectangular shape may be employed. Also, an alignment of the through holes 34 is not limited to the matrix type. For example, a radial alignment, a coaxial annular alignment, or other two-dimensional alignments may be employed, and also one-dimensional alignment may be employed.

The aperture 36 is provided in the through hole 34. The aperture 36 is formed integrally with the substrate 30 as an annular protrusion portion in one planar surface that is perpendicular to an optical axis of the lens 32 buried in the through hole 34. This annular protrusion portion is shaped to protrude toward the optical axis of the lens 32 from an inner wall of the through hole 34 in a symmetrical fashion with respect to the optical axis of the lens 32. The aperture 36 constitutes an opening around the optical axis of the lens 32, and is opaque to a light that is incident on the lens 32. Therefore, the aperture 36 allows a part of rays of light incident on the lens 32 to pass through an opening portion 37, and shuts out the remaining light. The aperture 36 is arranged at an appropriate location of the through hole 34 in the depth direction, in response to a structure of the optical system in the above image pickup unit 1 (see FIG.1). In the illustrated example, the aperture 36 is arranged at a location that corresponds to an almost center of the through hole 34 in the depth direction.

The lens 32 is provided to fill the through hole 34, and contains the aperture 36. The lens 32 is provided to contain the aperture 36 formed integrally with the substrate 30 and put this aperture 36 in the depth direction of the through hole 34. Therefore, a mechanical engagement for blocking a displacement of the lens 32 in the depth direction of the through hole 34 is produced between the substrate 30 and the lens 32. As a result, the fitting of the lens 32 into the substrate 30 is stabilized.

Also, the lens 32 provided by filling the through hole 34 can be formed wholly of a single material, and is excellent in optical performances. That is, the boundary between the materials whose optical characteristics such as a refractive index, etc. are different mutually is not formed on the optical axis of the lens 32, so that occurrence of the reflection of light at the boundary and the flare or ghost of image caused due to such reflection can be suppressed.

Like the illustrate example, a thickness of the aperture 36 is sufficiently thin in contrast to the substrate 30, and preferably a thickness of the aperture 3 should be set to 1/10 or less of a thickness of the substrate 30. According to this, occurrence of the reflection of light at the edge portion constituting the opening portion 37 of the aperture 36 and the flare or ghost of image caused due to such reflection can be suppressed. In this case, even in a situation that the aperture 36 is formed relatively thick, occurrence of the flare or ghost of image can be suppressed by forming the edge portion of the aperture 36 or the whole aperture 36 into a taper shape to have a sharp edge portion.

An example of a method of manufacturing the lens array in FIG.2 will be explained hereunder.

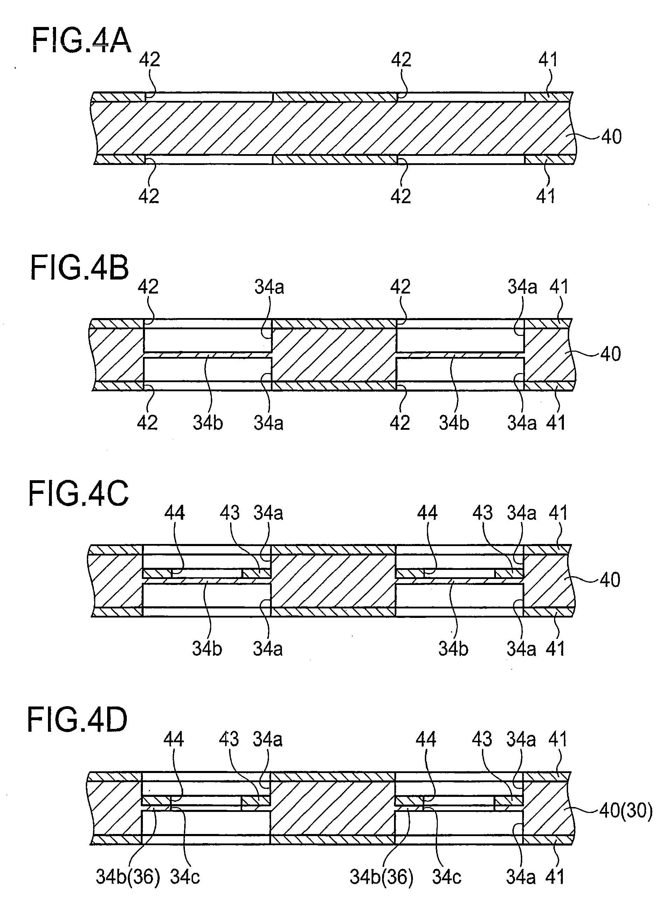

FIGs.4A to 4D show an example of a method of manufacturing a substrate contained in the lens array in FIG2.

The example in FIGs.4A to 4D shows the case where a plurality of through holes 34 are formed collectively by applying the blasting process to a substrate material 40, and thus the substrate 30 is obtained. The substrate material 40 is formed to have the same outer shape as the substrate 30 and the same thickness. As the material of the substrate material 40 (the substrate 30), glass, silicon, metal such as SUS, or the like, resin such as acrylic, epoxy, PAI (polyamideimide), PES (polyethersulfone), or the like, and others can be employed.

As shown in FIG.4A, a blast mask 41 is provided onto a surface on the upper side of the substrate material 40 in FIG.4A (referred to as an "upper surface" hereinafter) and a surface on the lower side (referred to as a "lower surface" hereinafter) respectively. A plurality of holes 42 are formed in the same alignment as those of a plurality of through holes 34 in the blast mask 41. The blast mask 41 exposes a plurality of areas of the surface of the substrate material 40. A diameter of the hole 42 has the same diameter as the opening of the through hole 34 (see FIG3).

As shown in FIG.4B, the blasting process is applied to the supper surface side and the lower surface side of the substrate material 40 respectively, so that the exposed areas of the substrate material 40 are removed and also a plurality of concave portions 34a are formed on the supper surface side and the lower surface side of the substrate material 40 respectively. A partition portion 34b of predetermined thickness is left between a pair of concave portions 34a that are aligned vertically. A depth of the concave portion 34a on the upper surface side and a depth of the concave portion 34a on the lower surface side are changed by controlling a process time, a processing pressure, etc. in the blasting processes applied from the upper surface side and the lower surface side, respectively. Accordingly, a thickness of the partition portion 34b and a position of the partition portion 34b in the thickness direction of the substrate material 40 can be adjusted adequately.

As shown in FIG.4C, a blast mask 43 is provided on the upper surface of each partition portion 34b. A hole 44 is formed in the blast mask 43 to expose an area in the center portion on the upper surface of the partition portion 34b. The exposed area has the same diameter as the opening portion 37 of the aperture 36 (see FIG.3).

As shown in FIG.4D, the blasting process is applied in such a manner that the exposed area in the center portion of the partition portion 34b is removed completely and also a communication hole 34c is formed in the center portion of the partition portion 34b. A pair of concave portions 34a are communicated with each other via the communication hole 34c. The through hole 34 consists of a pair of concave portions 34a and the communication hole 34c, and the partition portion 34b in which the communication hole 34c is formed constitutes the aperture 36.

The above example shows the case where that the through holes 34 are formed by applying the blasting process to the substrate material 40. In this case, the through holes 34 can be formed by the etching process.

The aperture 36 is formed integrally with the substrate 30, and the light shielding property is required of the aperture 36. Therefore, for example, either when the opaque material such as silicon, metal, resin such as PAI, or the like is employed as the material of the substrate 30 or when the transparent material such as glass, resin such as acrylic, epoxy, PES, or the like, which is colored in black, is employed as the material of the substrate 30, the light shielding property can also be provided to the aperture 36 that is formed integrally with the substrate 30. Also, irrespective of whether the material of the substrate 30 is transparent or not, the light shielding property can be provided to the aperture 36 by coating the surface of the aperture 36 with a black paint or plating the surface of the aperture 36 with chromium.

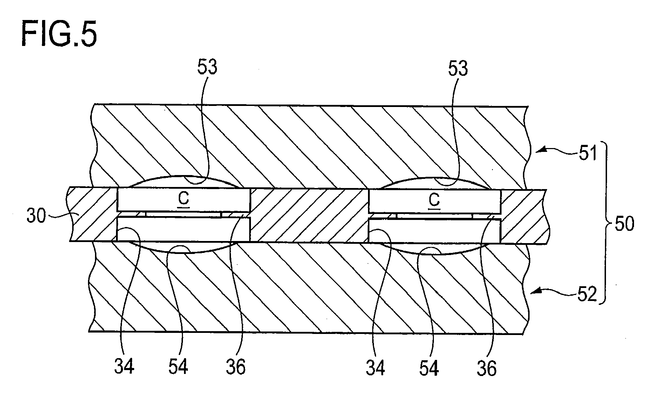

FIG.5 shows an example of molding dies that are employed in manufacturing the lens array in FIG.2.

A molding die 50 shown in FIG.5 is used to mold the lens 32 by compressing the resin material, and has an upper die 51 and a lower die 52.

A molding surface 53 that is shaped into an inverted surface of one optical surface 33 of the lens 32 is provided in plural on the opposing surface of the upper die 51, which opposes to the lower die 52, in the same alignment as those of a plurality of lenses 32 of the lens array 5. Also, a molding surface 54 that is shaped into an inverted surface of the other optical surface 33 of the lens 32 is provided in plural on the opposing surface of the lower die 52, which opposes to the upper die 51, in the same alignment as those of a plurality of lenses 32 of the lens array 5.

The upper die 51 and the lower die 52 are positioned to put the substrate 30 between them. A cavity C used to form the lens 32 is constructed by the molding surface 53 of the upper die 51 and the molding surface 54 of the lower die 52, which is paired with the upper die 51, and an inner surface of the through hole 34 of the substrate 30 that is positioned between the molding surfaces 53, 54.

As the resin material constituting the lens 32, an energy curable resin composite, for example, can be employed. As the energy curable resin composite, either of a resin composite that is cured by a heat and a resin composite that is cured by irradiating an active energy ray (e.g., ultraviolet irradiation, electron-beam irradiation) may be employed.

From a viewpoint of moldability such as a transfer aptitude of a mold shape, or the like, it is preferable that the resin composite constituting the lens 32 should have adequate flowablity before the resin composite is cured. Concretely the resin composite is a liquid at a room temperature, and the resin composite whose viscosity is about 1000 to 50000 mPa·s is preferable.

Also, it is preferable that the resin composite constituting the lens 32 should have a thermal resistance that does not cause the thermal deformation throughout the reflow step after such resin composite is cured. From the above viewpoints, a glass transition temperature of the cured resin composite should be set preferably to 200 °C or more, more preferably to 250 °C or more, and particularly preferably to 300 °C or more. In order to give a high thermal resistance to the resin composite, it is necessary that the mobility should be bound at a molecular level. As the effective means, there are listed (1) the means for improving a crosslinking density per unit volume, (2) the means for utilizing the resin having a rigid ring structure (for example, the resin having an alicyclic structure such as cyclohexane, norbomane, tetracyclododecane, or the like, an aromatic ring structure such as benzene, naphthalene, or the like, a cardo structure such as 9,9'-biphenylfluorene, or the like, or a spiro structure such as spirobiindane, or the like. Concretely, the resin set forth in JP-A-9-137043 , JP-A-10-67970 , JP-A-2003-55316 , JP-A-2007-334018 , JP-A-2007-238883 , or the like, for example), (3) the means for dispersing uniformly the high Tg material such as inorganic fine particles, or the like (e.g., set forth in JP-A-5-209027 , JP-A-10-298265 , or the like), and others. These means may be employed in plural in combination. It is preferable that the combination should be adjusted within a cope not to spoil other characteristics such as flowability, a shrinkage rate, a refractive index, and the like.

Also, from the viewpoint of a form transfer precision, it is preferable that the resin composite whose volume shrinkage rate caused by a curing reaction is small should be employed as the resin composite constituting the lens 32. A curing shrinkage rate of the resin composite should be set preferably to 10 % or less, more preferably to 5 % or less, and particularly preferably to 3 % or less. As the resin composite whose curing shrinkage rate is low, for example, (1) the resin composite containing a curing agent (a prepolymer, or the like) of high molecular weight (e.g., set forth in JP-A-2001-19740 , JP-A-2004-302293 , JP-A-2007-211247 , or the like. A number-average molecular weight of the curing agent of high molecular weight should be set preferably to a range of 200 to 100,000, more preferably to a range of 500 to 50,000, and particularly preferably to a range of 1,000 to 20,000. Also, a ratio calculated by the number-average molecular weight of the curing agent/the number of curing reaction group should be set preferably to a range of 50 to 10,000, more preferably to a range of 100 to 5,000, and particularly preferably to a range of 200 to 3,000), (2) the resin composite containing an unreactive material (organic/inorganic fine particles, unreactive resin, or the like)(e.g., set forth in JP-A-6-298883 , JP-A-2001-247793 , JP-A-2006-225434 , or the like), (3) the resin composite containing a low-shrinkage crosslinking reaction group (for example, a ring-opening polymerization group (for example, epoxy group (e.g., set forth in JP-A-2004- 210932 , or the like), an oxetanyl group (e.g., set forth in JP-A-8-134405 , or the like), an episulfide group (e.g., set forth in JP-A-2002-105110 , or the like), a cyclic carbonate group (e.g., set forth in JP-A-7-62065 , or the like), or the like), an en/thiol cure group (e.g., set forth in JP-A-2003-20334 , or the like), a hydrosilylation cure group (e.g., set forth in JP-A-2005- 15666 , or the like), or the like), (4) the resin composite containing a rigid skelton resin (fluorene, adamantane, isophorone, or the like)(e.g., set forth in JP-A-9-137043 , or the like), (5) the resin composite in which an interpenetrating network (a so-called IPN structure) containing two types of monomers whose polymerization groups are different is formed (e.g., set forth in JP-A-2006-131868 , or the like), (6) the resin composite containing an expansive material (e.g., set forth in JP-A-2004-2719 , JP-A-2008-238417 , or the like), and the like can be listed, and these resin composites can be utilized preferably in the present invention. Also, from the viewpoint of physical property optimization, it is preferable that a plurality of curing shrinkage reducing means mentioned above should be employed in combination (for example, the prepolymer containing the ring-opening polymerization group and the resin composite containing the fine particles, and the like).

Also, a mixture of two types of the resins whose Abbe's numbers are different, e.g., whose Abbe's numbers are high and low, or more is desired as the resin composite constituting the lens 32. In the resin on the high Abbe's number side, the Abbe's number (vd) should be set preferably to 50 or more, more preferably to 55 or more, and particularly preferably to 60 or more. Also, the refractive index (nd) should be set preferably to 1.52 or more, more preferably to 1.55 or more, and particularly preferably to 1.57 or more. As such resin, the aliphatic resin is preferable, and the resin having an alicycle structure (for example, the resin having a ring structure such as cyclohexane, norbornane, adamantane, tricyclodecane, tetracyclododecane, or the like. Concretely, the resin set forth in JP-A-10-152551 , JP-A-2002-212500 , JP-A-2003-20334 , JP-A-2004-210932 , JP-A-2006-199790 , JP-A-2007-2144 , JP-A-2007-284650 , JP-A-2008-105999 , or the like, for example) is particularly preferable. In the resin on the low Abbe's number side, the Abbe's number (vd) should be set preferably to 3 0 or less, more preferably to 25 or less, and particularly preferably to 20 or less. Also, the refractive index (nd) should be set preferably to 1.60 or more, more preferably to 1.63 or more, and particularly preferably to 1.65 or more. As such resin, the resin having an aromatic structure is preferable. For example, the resin containing the structure such as 9,9'-diarylfluorene, naphthalene, benzothiazole, benzotriazole, or the like (concretely, the resin set forth in JP-A-60-38411 , JP-A-10-67977 , JP-A-2002-47335 , JP-A-2003-238884 , JP-A-2004-83855 , JP-A-2005-325331 , JP-A-2007-238883 , WO-A-2006/095610, JP-B-2537540 , or the like, for example) is preferable.

Also, it is preferable that, in order to enhance a refractive index or to adjust the Abbe's number, the inorganic fine particles should be dispersed into the matrix in the resin composite constituting the lens 32. As the inorganic fine particle, for example, an oxide fine particle, a sulfide fine particle, a selenide fme particle, and a telluride fine particle can be listed. More concretely, for example, the fine particle consisting of a zirconium oxide, a titanium oxide, a zinc oxide, a tin oxide, a niobium oxide, a cerium oxide, an aluminum oxide, a lanthanum oxide, a yttrium oxide, a zinc sulfide, or the like can be listed. In particular, it is preferable that the fine particle consisting of a lanthanum oxide, an aluminum oxide, a zirconium oxide, or the like should be dispersed into the resin of the high Abbe's number, while it is preferable that the fine particle consisting of a titanium oxide, a tin oxide, a zirconium oxide, or the like should be dispersed into the resin of the low Abbe's number. Either the inorganic fine particles may be employed solely, or two types or more of the inorganic fine particles may be employed in combination. Also, a composite material containing plural components may be employed. Also, for various purposes of reducing photocatalytic activity, reducing water absorption, etc., a different type metal may be doped into the inorganic fine particle, a surface layer of the inorganic fine particle may be coated with a different type metal oxide such as silica, alumina, or the like, or a surface of the inorganic fine particle may be modified by a silane coupling agent, a titanate coupling agent, organic acid (carboxylic acids, sulfonic acids, phosphoric acids, phosphonic acids, or the like), a dispersing agent having an organic acid group, or the like. Normally, a number-average particle size of the inorganic fine particle may be set to almost 1 nm to 1000 nm. In this case, the characteristic of the material is changed in some case if the particle size is too small whereas the influence of the Rayleigh scattering becomes conspicuous if the particle size is too large. Therefore, the particle size should be set preferably to 1 nm to 15 nm, more preferably to 2 nm to 10 nm, and particularly preferably to 3 nm to 7 nm. Also, it is desirable that a particle size distribution of the particle size should be set as narrow as possible. The various ways of defining such monodisperse particle may be considered. For example, the numerically specified range set forth in JP-A-2006-160992 belongs to the preferable range of the particle size distribution. Here, the above number-average primary particle size can be measured by the X-ray diffractometer (XRD), the transmission electron microscope (TEM), or the like, for example. The refractive index of the inorganic fine particles should be set preferably to 1.90 to 3.00 at 22 °C and a wavelength of 589 nm, more preferably to 1.90 to 2.70, and particularly preferably to 2.00 to 2.70. From viewpoints of transparency and higher refractive index, a content of inorganic fine particles in a resin should be set preferably to 5 mass % or more, more preferably to 10 to 70 mass %, and particularly preferably to 30 to 60 mass %.

In order to disperse the fine particles uniformly into the resin composite, it is desirable that the fine particles should be dispersed by using appropriately the dispersing agent containing the functional group that has a reactivity with resin monomers constituting the matrix (e.g., set forth in the embodiment of JP-A-2007-238884 , and the like), the block copolymer constructed by the hydrophobic segment and the hydrophilic segment (e.g., set forth in JP-A-2007-211164 ), the resin containing the functional group that can produce any chemical reaction with the inorganic fine particle at the polymer terminal or side chain (e.g., set forth in JP-A-2007-238929 , JP-A-2007-238930 , or the like), or the like, for example.

Also, in order to improve a bonding strength between the lens 32 and the substrate 30, the coupling agent may be mixed appropriately in the resin composite constituting the lens 32. For example, a silane coupling agent, a titanate coupling agent, an aluminate coupling agent, or the like may be mixed to improve the adhesive property to the inorganic material.

Also, the additive may be mixed appropriately in the resin composite constituting the lens 32. For example, the publicly known mold releasing agent such as a silicone-based chemical agent, a fluorine-based chemical agent, a long-chain alkyl group containing chemical agent, or the like, the antioxidizing agent such as hindered phenol, or the like, or the like may be mixed.

Also, as occasion demands, a curing catalyst or an initiator may be mixed in the resin composite constituting the lens 32. Concretely, the compound that accelerates a curing reaction (a radical polymerization or an ionic polymerization) by using an action of heat or activation energy rays, which is set forth in JP-A-2005-92099 (paragraph numbers [0063] to [0070]), or the like, for example, can be listed. An amount of addition of the curing accelerator, or the like is different based on a type of the catalyst or the initiator, a difference of the curing reaction part, or the like, and such amount of addition cannot be specified unconditionally. In general, preferably such amount of addition should be set to almost 0.1 to 15 mass % of the whole solid content of the curing reaction resin composite, and more preferably such amount of addition should be set to almost 0.5 to 5 mass %.

The resin composite constituting the lens 32 can be manufactured by mixing appropriately the above components. At this time, when other components can be dissolved in a liquid depolymeric monomer (reactive diluent), or the like, it is not requested to add the solvent separately. However, when other components are not applicable to this case, respective constitutive components can be dissolved by using the solvent in manufacturing the curable resin composite. The solvent that can be used in the curing reaction resin composite is not particularly limited and can be appropriately chosen if such solvent does not cause precipitation of the composite and can be uniformly dissolved or dispersed. Concretely, for example, ketones (e.g., acetone, methyl ethyl ketone, methyl isobutyl ketone, etc.), esters (e.g., ethyl acetate, butyl acetate, etc.), ethers (e.g., tetrahydrofuran, 1,4-dioxane, etc.), alcohols (e.g., methanol, ethanol, isopropylene, butanol, ethylene glycol, etc.), aromatic hydrocarbons (e.g., toluene, xylene, etc.), water, and the like can be listed. When the curable composite contains the solvent, preferably the mold form transferring operation should be done after the solvent is dried.

When the energy curable resin composite is employed as the resin composite constituting the lens 32, the material of the upper die 51 and the lower die 52 may be chosen appropriately in response to the resin composite. That is, when the thermosetting resin is employed as the resin composite, the metal material such as nickel, or the like, which is excellent in thermal conductivity, or the material such as a glass, or the like, through which an infrared ray is transmitted, for example, is employed as the material of the die. Also, when the UV curable resin is employed as the resin composite, the material such as a glass, or the like, through which an ultraviolet ray is transmitted, for example, is employed as the material of the die. Also, when the electron-beam curable resin is employed as the resin composite, the material through which an electron beam is transmitted is employed as the material of the die.

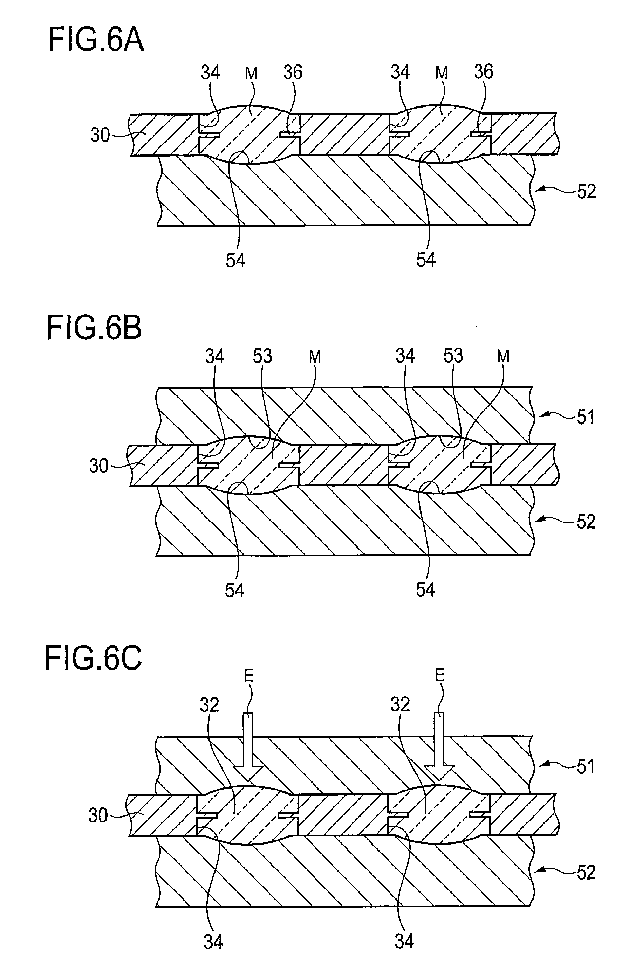

FIGs.6A to 6C show an example of a method of manufacturing the lens array in FIG.2.

As shown in FIG.6A, the lower die 52 is set on the substrate 30. The through hole 34 in the substrate 30 is arranged on the molding surface 54 of the lower die 52. Then, a resin material M is supplied into the concave portion, which is constructed by an inner surface of the through hole 34 in the substrate 30 and the molding surface 54 of the lower die 52, by an amount that is needed to form the lens 32.

As shown in FIG.6B, the upper die 51 is pushed down. According to the downward motion of the upper die 51, the resin material M is pressed between the molding surface 53 of the upper die 51 and the molding surface 54 of the lower die 52. Thus, the resin material M is deformed to copy a form of inner surfaces of the molding surfaces 53, 54 and the through hole 34.

As shown in FIG.6C, the cavity is filled with the resin material M in a state that the molding die 50 is closed after the upper die 51 is pushed down completely. In this state, the resin material M is cured by applying a curing energy E appropriately. Thus, the resin material M is buried in the through hole 34, and the lens 32 is formed.

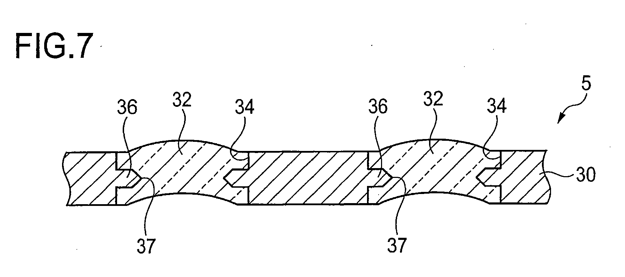

FIG.7 shows a variation of the lens array in FIG.2.

In the lens array 5 shown in FIG.7, the aperture 3 6 is formed relatively thick in contrast to the substrate 30, and the edge portion of the aperture 36 constituting the opening portion 37 is formed into a taper shape. As described above, because the edge portion of the aperture 36 is sharpened as a taper shape, occurrence of the reflection of light at the edge portion and the flare or ghost of image caused due to such reflection can be suppressed. Then, because the lens 32 contains the aperture 36 that is formed integrally with the substrate 30, a fixation of the lens 32 to the substrate 30 can be stabilized. In this case, because the strength of the aperture 36 is enhanced by forming the aperture 36 relatively thick, a fixation of the lens 32 to the substrate 30 can be stabilized much more.

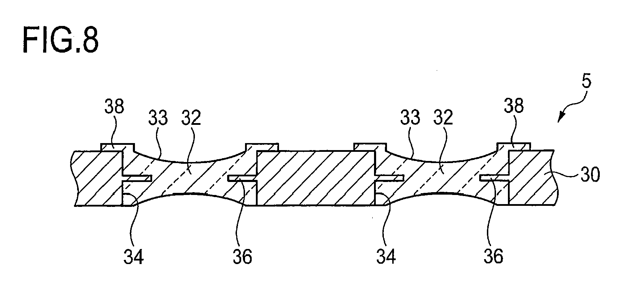

FIG.8 shows another variation of the lens array in FIG.2.

In the lens array 5 shown in FIG.8, a flange 38 that extends outward beyond the outer side of the optical surface 33 is provided to one end portion (end portion on the upper side in FIG.8) of the lens 32 in the optical axis direction, and this flange 38 overlaps with the surface of the substrate 30. Because the flange 38 overlaps with the surface of the substrate 30, a contact area between the lens 32 and the substrate 30 is enlarged and a bonding strength between them is improved. As a result, a fixation of the lens 32 to the substrate 30 can be stabilized further more.

In the illustrated example, the flange 38 is provided only to one end portion of the lens 32 in the optical axis direction. In this case, the flange 38 may be provided to both end portions respectively, and this flange 38 may overlap with the surfaces of the substrate 30 on both sides respectively. According to this, a pair of flanges 38 can hold the substrate 30 to put it between them, and a fixation of the lens 32 to the substrate 30 can be stabilized still further more.

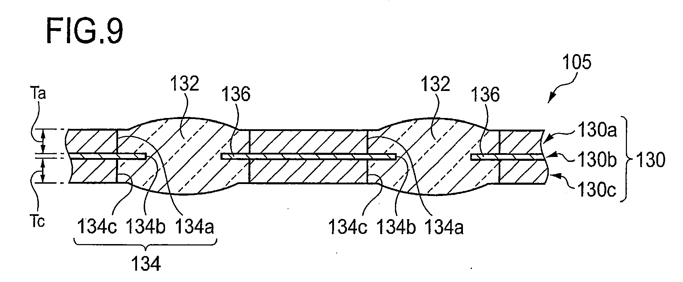

FIG.9 shows another example of the lens array.

A lens array 105 shown in FIG.9 is equipped with a substrate 130 and a plurality of lenses 132.

The substrate 130 is formed like a wafer, and a plurality of through holes 134 are formed in the substrate 130. An aperture 136 is provided in the through holes 134 respectively. The lens 132 is formed by compression-molding the resin material in the through hole 134, and is provided to bury the through holes 134.

The substrate 130 is constructed by laminating three sheets of substrate members 130a, 130b, 130c. A plurality of holes 134a are formed in the substrate member 130a in the same alignment as those of a plurality of lenses 132 in the lens array 105. The hole 134a is formed like a cylindrical hole such that a sectional shape, which is taken in parallel with a surface of the substrate member 130a, of this hole constitutes a circular shape whose diameter is substantially constant at any location of the hole 134a in the depth direction. Similarly, a plurality of cylindrical holes 134b are formed in the substrate member 130b, and also a plurality of cylindrical holes 134c are formed in the substrate member 130c.

The substrate 130 is constructed by laminating these substrate members 130a, 130b, and 130c such that the holes 134a in the substrate member 130a, the holes 134b in the substrate member 130b, and the holes 134c in the substrate member 130c are aligned mutually. Also, the through hole 134 in the substrate 130 is constructed by connecting the hole 134a in the substrate member 130a, the hole 134b in the substrate member 130b, and the hole 134c in the substrate member 130c to communicate with each other in this order.

A diameter of the hole 134a in the substrate member 130a located in the uppermost layer in FIG.9 and a diameter of the holes 134c in the substrate member 130c located in the lowermost layer in FIG.9 are set equal to each other. Also, a diameter of the hole 134b in the substrate member 130b being put between the substrate member 130a and the substrate member 130c is set smaller than the diameters of the holes 134a, 134c. Therefore, a peripheral portion of the hole 134b in the substrate member 130b is exposed in the holes 134a, 134c, and serves as the aperture 136. Respective holes 134a, 134b, 134c are formed to have a simple shape like a cylindrical shape, and the formation of these holes is facilitated. When the metal or the resin having relatively high toughness is employed as the material of the substrate members 130a, 130b, and 130c, these holes 134a, 134b, 134c can also be formed by the machining using the punching.

Also, in the illustrated example, respective thicknesses of the substrate member 130a and the substrate member 130c, which are formed to put the substrate member 130b constituting the aperture 136, are set equal to each other, and the aperture 136 is arranged at the location in the almost center of the through hole 134 in the depth direction. When a thickness Ta of the substrate member 130a and a thickness Tc of the substrate member 130c can be increased/decreased complementarily, the position of the aperture 136 can be easily changed while keeping a thickness of the substrate 130 constant.

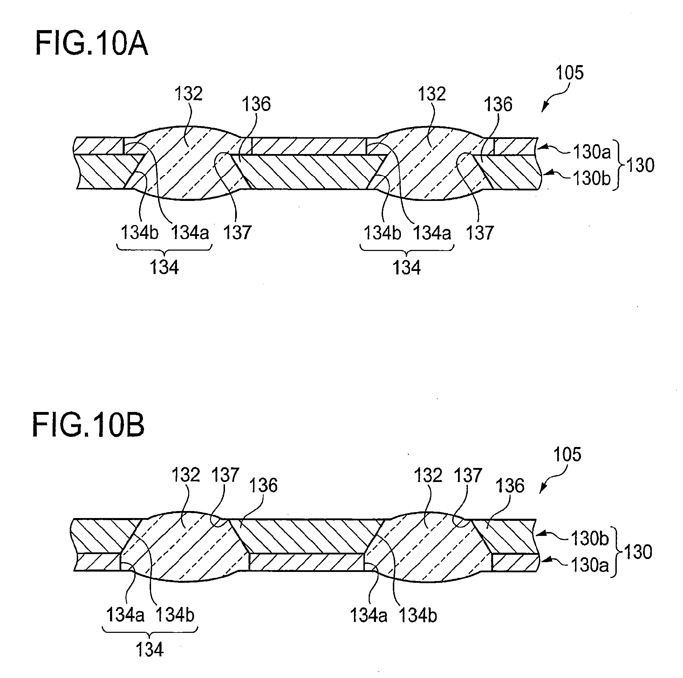

FIGs.10A and 10B show variations of the lens array in FIG9.

In the lens array 105 shown in FIGs.10A and 10B, the substrate 130 is constructed by laminating two sheets of the substrate members 130a, 130b. The hole 134a in the substrate member 130a is formed like a cylindrical hole such that a sectional shape, which is taken in parallel with the surface of the substrate member 130a, of this hole constitutes a circular shape whose diameter D is substantially constant at any location of the hole 134a in the depth direction. In contrast, the hole 134b in the substrate member 130b is formed like a tapered hole in section such that its diameter is reduced gradually from one opening to the other opening, while keeping a sectional shape in a circular shape at any location of the cylindrical hole 134b in the depth direction. A diameter of the small opening out of both openings of the hole 134b is set smaller than a diameter of the hole 134a, and a diameter of the large opening is set equal to a diameter of the hole 134a.

FIG.10A shows the case where the substrate member 130a is laminated on the surface of the substrate member 130b, on which the small openings out of both openings of the hole 134b are aligned, on the upper side in FIG. 10A. FIG.10B shows the case where the substrate member 130a is laminated on the surface of the substrate member 130b, on which the large openings out of both openings of the hole 134b are aligned, on the lower side in FIG. 10B. In both cases, the surface of the substrate member 130b on which the diameter of the hole 134b is set smallest acts as the aperture 136 on the upper side in Figures.

The cutoff or transmission of a pencil of light in the aperture 136 is decided by the smallest-diameter part of an opening portion 137. Therefore, it is possible to say that the position of the aperture 136 corresponds to the position of the smallest-diameter part of the opening portion 137. In the example in FIG 10A, the position of the aperture 136 corresponds to the position of the small-diameter part of the hole 134b in the substrate member 130b constituting the opening portion 137, and corresponds to the part of the through hole 134 located in the almost center in the depth direction. Also, in FIG.10B, the position of the aperture 136 corresponds to the part that is located at the surface of the substrate 130 on the upper side in FIG. 10B. The hole 134b in the substrate member 130b constituting the opening portion 137 of the aperture 136 is shaped asymmetrically with respect to the section that is taken in parallel with the surface of the substrate member 130b so as to pass through the almost center location in the depth direction. As a result, even when the substrate 130 is composed of two sheets of substrate members 130a, 130b, the position of the aperture 136 can be changed by changing the laminated order of these substrate members.

The lens array 5 (105) manufactured as described above is divided into a plurality of lens modules 3, which contain the lens 32 (132) individually, when the substrate 30 (130) is cut by the cutter, or the like. As described above, the lens module 3 when combined with the sensor module 2 constitutes the image pickup unit 1.

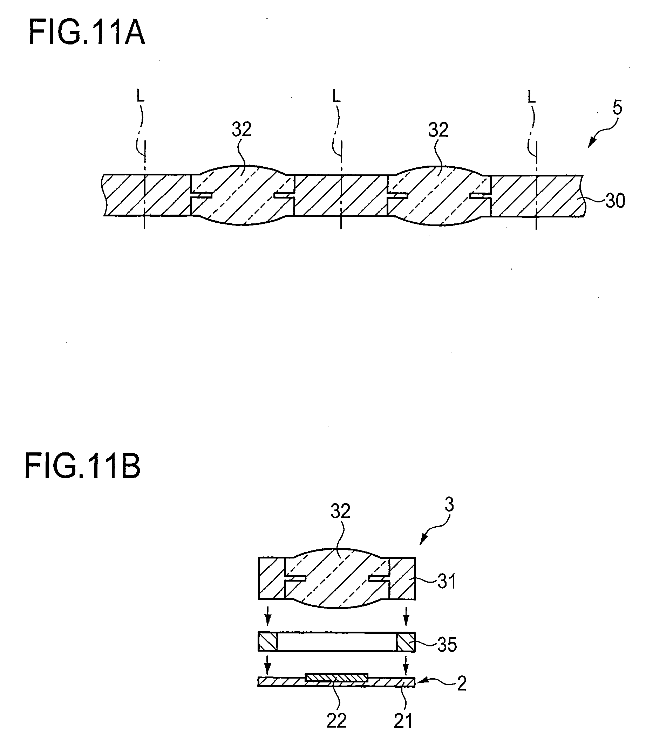

FIGs.11A and 11B show an example of a method of manufacturing the image pickup unit in FIG.1.

As shown in FIG.11A, the substrate 30 is cut along cutting lines L that are extended between rows and columns of a plurality of lens 32 that are aligned in a matrix fashion. According to this, the lens array 5 is divided into a plurality of lens modules 3 that contain the lens 32 respectively. Then, as shown in FIG.11B, each lens module 3 is laminated on the sensor module 2 via the spacer 35. With the above, the image pickup unit 1 (see FIG.1) is obtained.

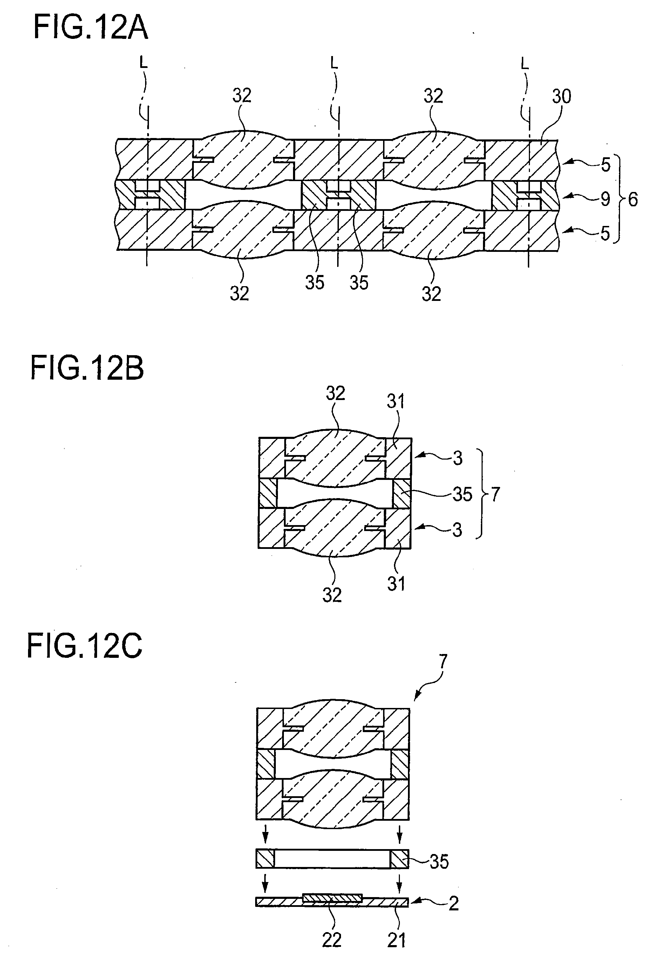

FIGs.12A to 12C show a variation of a method of manufacturing the image pickup unit in FIGs.11A and 11B. In the example shown in FIGs.12A to 12C, two sensor modules 2 are laminated on the sensor module 2.

As shown in FIG.12A, two sheets of lens arrays 5 are laminated via a spacer array 9, in which a plurality of spacers 35 are aligned in the same alignment as those of the lenses 32 in the lens array 5 and are connected mutually, and thus a lens array laminated structure 6 is constructed. The substrates 30 of two sheets of lens arrays 5 and the spacer array 9, which are contained in the lens array laminated structure 6, are cut collectively along the cutting lines L respectively. As a result, as shown in FIG.12B, the lens array laminated structure 6 is divided into a plurality of lens module laminated structures 7 in each of which two lens modules 3 are laminated. Then, as shown in FIG.12C, each lens module laminated structure 7 is laminated on the sensor module 2 via the spacer 35. With the above, the image pickup unit 1 (see FIG.1) is obtained.

In this manner, in case the lens module laminated structure 7 in which a plurality of lens modules 3 are laminated in advance is laminated on the sensor module 2, productivity of the image pickup unit 1 can be improved rather than the case where these lens modules 3 are laminated sequentially on the sensor module 2.

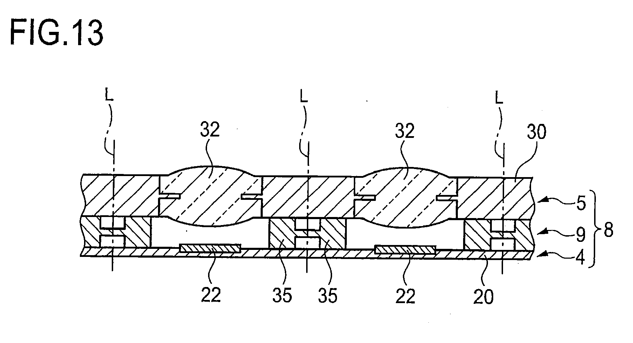

FIG.13 shows another example of a method of manufacturing the image pickup unit in FIG.1.

In the example shown in FIG.13, an element array laminated structure 8 constituting an assembly of a plurality of image pickup units 1 is constructed by stacking the lens array 5 on a sensor array 4, and then the element array laminated structure 8 is divided into a plurality of image pickup units 1.

The sensor array 4 includes a wafer 20 that is formed of the semiconductor material such as silicon, or the like. A plurality of solid state imaging devices 22 are aligned on the sensor array 4 in the same alignment as those of the lenses 32 in the lens array 5. Typically, a diameter of the wafer 20 is set to 6 inch, 8 inch, or 12 inch, and several thousand of solid state imaging devices 22 are aligned there.

The lens array 5 is stacked on the sensor array 4 via the spacer array 9 to constitute the element array laminated structure 8. Then, the wafer 20 of the sensor array 4, the substrate 30 of the lens array 5, and the spacer array 9 contained in the element array laminated structure 8 are cut collectively along the cutting lines L respectively. With the above, the element array laminated structure 8 is divided into a plurality of image pickup units 1 each of which contains the lens 32 and the solid state imaging device 22.

In this manner, in case a sheet or more of lens array 5 is stacked on the sensor array 4 and then the wafer 20 of the sensor array 4 and the substrate 30 of the lens array 5 are cut together into a plurality of image pickup units 1, productivity of the image pickup unit 1 can be improved much more rather than the case where the lens module 3 or the lens module laminated structure 7 is fitted to the sensor module 2.

As discussed above, it is disclosed that a lens array includes: a substrate in which a plurality of through holes are formed; and a plurality of lenses provided in the substrate by filling the plurality of through holes respectively. A protrusion portion that is opaque to an incident light is provided in the through hole as an aperture, which cuts off a light incident on parts except an opening portion. And, the protrusion portion extends from an inner wall of the through hole toward an optical axis of the lens in one planar surface, which is perpendicular to the optical axis of the lens buried in the through hole, to constitute the opening portion around the optical axis.

Also, in the lens array discussed above, the substrate is constructed by laminating a plurality of substrate members in which a plurality of holes are provided in a same alignment respectively, an opening area of the hole provided in at least one of the plurality of substrate members is formed smaller than an opening area of the hole provided in remaining substrate members, the through holes are formed in the substrate by laminating the plurality of substrate members such that respective positions of the holes are aligned mutually, and a part that extends into the lens being buried in at least the through hole, of the at least one of the plurality of substrate members is formed as the protrusion portion that is opaque to the incident light such that the protrusion portion that forms the opening portion in the hole of the at least one of the plurality of substrate members is provided as the aperture.

Also, in the lens array discussed above, an edge portion of the aperture on the opening side is sharpened.

Also, it is disclosed that a lens array laminated structure in which a plurality of lens arrays that contain at least one lens array discussed above are laminated.

Also, it is disclosed that: an element array laminated structure includes: the lens array laminated structure discussed above; and a sensor array in which a plurality of solid state imaging devices are aligned on a wafer. The lens array laminated structure is stacked on the sensor array.

Also, it is disclosed that a lens module that is divided from the lens array discussed above to contain one lens.

Also, it is disclosed that a lens module laminated structure that is divided from the lens array laminated structure discussed above to contain the lenses that are aligned in a laminated direction.

Also, it is disclosed that an image pickup unit that is divided from the element array laminated structure discussed above to contain the solid state imaging device and the lens both of which are aligned in a laminated direction.

## Claims

1. A lens array, comprising:
a substrate in which a plurality of through holes are formed; and
a plurality of lenses provided in the substrate by filling the plurality of through holes respectively;
wherein a protrusion portion that is opaque to an incident light is provided in the through hole as an aperture, which cuts off a light incident on parts except an opening portion, and
the protrusion portion extends from an inner wall of the through hole toward an optical axis of the lens in one planar surface, which is perpendicular to the optical axis of the lens buried in the through hole, to constitute the opening portion around the optical axis.

2. The lens array according to claim 1, wherein
the substrate is constructed by laminating a plurality of substrate members in which a plurality of holes are provided in a same alignment respectively,
an opening area of the hole provided in at least one of the plurality of substrate members is formed smaller than an opening area of the hole provided in remaining substrate members,
the through holes are formed in the substrate by laminating the plurality of substrate members such that respective positions of the holes are aligned mutually, and
a part that extends into the lens being buried in at least the through hole, of the at least one of the plurality of substrate members is formed as the protrusion portion that is opaque to the incident light such that the protrusion portion that forms the opening portion in the hole of the at least one of the plurality of substrate members is provided as the aperture.

3. The lens array according to claim 1 or 2, wherein
an edge portion of the aperture on the opening side is sharpened.

4. A lens array laminated structure in which a plurality of lens arrays that contain at least one lens array according to any one of claim 1 to 3 are laminated.

5. An element array laminated structure, comprising:
the lens array laminated structure according to claim 4; and
a sensor array in which a plurality of solid state imaging devices are aligned on a wafer,
wherein the lens array laminated structure is stacked on the sensor array.

6. A lens module that is divided from the lens array according to any one of claims 1 to 3 to contain one lens.

7. A lens module laminated structure that is divided from the lens array laminated structure according to claim 4 to contain the lenses that are aligned in a laminated direction.

8. An image pickup unit that is divided from the element array laminated structure according to claim 5 to contain the solid state imaging device and the lens both of which are aligned in a laminated direction.
